# EUROPEAN PATENT SPECIFICATION

(11) **EP 0 434 886 B1**
(45) Date of publication and mention of the grant of the patent: **08.11.1995**
(21) Application number: 90102794.6
(22) Date of filing: 13.02.1990
(51) Int. Cl.: H04N 5/225, G03B 15/05, F21L 5/00

(54) **Video Camera with integral light**
Videokamera mit integriertem Licht
Caméra vidéo à lumière intégrée

(30) Priority: 26.12.1989 US 456106
(43) Date of publication of application: 03.07.1991
(73) Proprietor: Anton/Bauer, Inc., Shelton Connecticut 06484 (US)
(72) Inventor: Wilson, Anton,, White Plains, NY 10604 (US); Crouch, Jeff,, Terryville, CT 06786 (US)
(74) Representative: Gaucherand, Michel

(56) References cited:
- DE-A- 2 841 518
- US-A- 4 853 723
- PATENT ABSTRACTS OF JAPAN vol. 13, no. 248 (E-770)(3596) 09 June 1989, & JP-A-01 049378
- PATENT ABSTRACTS OF JAPAN vol. 6, no. 159 (P-136)(1037) 20 August 1982, JP-A-57 078037

## Description

### FIELD OF THE INVENTION

The invention relates to a video camera in combination with a modular light. In particular, a video camera is disclosed having a modular light integrally connected with the casing of the video camera in a manner so as to be pivotally attached to the camera body and receiving power from the same on-camera source (such as a battery) as the camera. Moreover, the modular light is able to be disposed in a non-use position where the lens and bulb is protected from being damaged.

### DESCRIPTION OF THE PRIOR ART

State of the art video cameras are capable of creating the highest quality video images. However, it must be remembered that a video camera creates its electronic images from light. If the quality of the lighting (irrespective of the quantity of light) is poor, the video image will also be poor irrespective of the quality of the camera.

At the present time, virtually all location video makes use of available light at the filming location. Typically this can be in office buildings, such as those used by the government and industry where the illumination comes from overhead ceiling lights. This overhead lighting is perfectly adequate for the background but is unacceptable for the important foreground subjects such as people. Unlike professional studio lighting which comes from both the front and overhead, the top only lighting creates harsh shadows on the face of the foreground subjects. Top only lighting also greatly exaggerates wrinkles in the face and clothes. The result is an uncomplimentary and poor quality video image.

In the past, a light was attached to the video camera in an attempt to correct this condition. Unfortunately, this technique proved to be unsuccessful for a number of reasons including the following: 1. Often lights of between about 100 and 250 watts were employed. The intensity of such lights forced a smaller lens aperture setting which, as a result, caused the background to become overly dark. The result was of as poor quality as no light at all. 2. These lights were often big and bulky. 3. The power drain of these large lights required additional batteries and cables which negated the portability of compact, one-piece camcorders.

A solution to this problem has been to provide a low voltage bulb for situations where battery operation is required. A light module incorporating a low voltage bulb was disclosed in U.S. Patent US-A-4,554,621 (′621) entitled "MODULAR LIGHT ASSEMBLY" assigned to a common assignee with the present invention. This modular light has proven to be very effective in overcoming the problems indicated hereinbefore. However, the modular light covered by the ′621 patent was added to video cameras as an aftermarket accessory. This resulted in the following additional problems which the present invention has sought to overcome. 1. Many camera operators still experience poor video quality and may not associate the lack of quality with the need for a fill in light. Instead they either blame their own competence or the camera itself. 2. Even though the modular light disclosed in the ′621 patent is quite small and compact, when attached to a camera, it can physically interfere with other camera features and functions and possibly prevent the camera from fitting into the carrying case. Furthermore, the mounting hardware required for any accessory light adds a degree of weight and bulk which could be found objectionable.

It is a problem underlying the present invention to provide a video camera with an integral light which obviates one or more of the limitations and disadvantages of the described prior arrangements.

It is a further advantage of the present invention to provide a video camera with an integral light wherein the light is pivotally mounted on the video camera body.

It is a still further advantage of the present invention to provide a video camera with an integral light wherein the light can be disposed in a stored, non-use position.

It is a yet further advantage of the present invention to provide a video camera with a integral light wherein the light can be easily positioned by the camera operator and held in place by a pivot mechanism associated with the light.

### SUMMARY OF THE INVENTION

In accordance with the invention, a video camera comprises a video camera body in combination with a light module. A first means, integral with said video camera body, is provided for mounting the light module to the camera body. The first means includes a pivotal connection means for selectively positioning the light module.

The pivotal connection means enables the light module to pivot from one end location where the light module is in a first position, through a range of intermediate locations placing the light module in a range of positions, and finally to a second end location where the light module is disposed in a stored, non-use position.

By building the light module as an integral part of the camera body, such as in the handle, the size and weight can be reduced to relatively insignificant proportions.

### BRIEF DESCRIPTION OF THE DRAWINGS

Further objects and advantages of the invention will become apparent from the following description and claims, and from the accompanying drawings, wherein:
FIG. 1 is a diagrammatic view of a modular light assembly of the present invention mounted on a video camera in an operating position;
FIG. 2 is a diagrammatic view of a modular light assembly of the present invention mounted on a video camera in a stored position;
FIG. 3 is a perspective view of a pivotally mounted electrical socket of the present invention mounted on the handle of a video camera in a stored away position;
FIG. 4 is an exploded, perspective view of the handle of a video camera, in accordance with the present invention, incorporating a pivotal electrical socket;
FIG. 5 is an exploded, perspective view of a clutch assembly in accordance with the present invention forming a part of the electrical socket;
FIG. 6 is a diagrammatic view of the pivotally mounted electrical socket illustrating the range of movement it can achieve;
FIG. 7 is a view of a switch mounted onto the handle of a video camera;
FIG. 8 is a circuit diagram of a modular light assembly using internal camera circuitry; and
FIG. 9 is a circuit diagram of a modular light assembly using external camera circuitry.

### DETAILED DESCRIPTION OF THE PREFERRED EMBODIMENT

Referring now to the drawings in detail, wherein like numerals indicate like elements throughout the several views, the video camera with integral modular light assembly of the present invention is illustrated in FIG.'s 1 and 2 by the numeral 10.

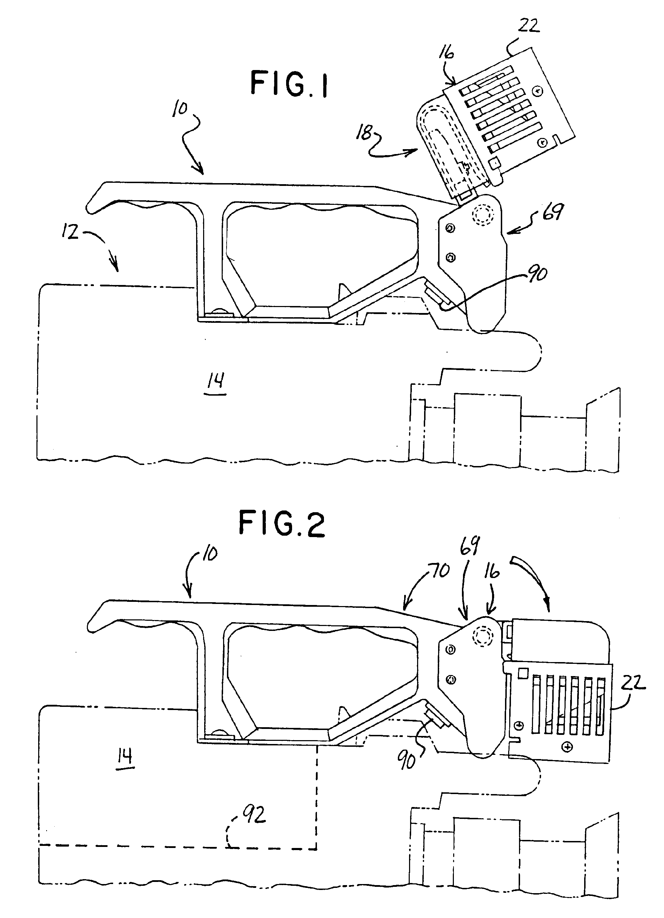

The video camera 12, as best seen in FIG.'s 1-3, comprises the combination of video camera body 14 and a modular light assembly 16. The modular light assembly can be pivotally attached to the video camera body 14 by any desired means to enable the light to be easily positioned by the operator of the camera. The pivotal means can include a clutch mechanism 42 so that the light remains in its set position. When not in use, the light can be placed in a stored position as seen in FIG. 2.

The modular light assembly 16 can also be pivotally attached to the camera body 14 by means of an electrical clip and socket subassembly 18 integrally connected to the camera body 14. The electrical clip and socket subassembly 18 includes a pivotal connector 20 for selectively positioning the modular light assembly 16.

As particularly disclosed in U.S. Patent US-A-4,554,621, the modular light assembly 16 includes a light module 22 adapted to be slidably received and removable from the electrical clip and socket subassembly 18. The clip and socket subassembly 18 are pivotally mounted at one end 24, as best seen in FIG.'s 4 and 6, to a mounting block 69. The clip and socket subassembly 18 is formed from a clip of resilient metal having a front leg portion 26, a top leg portion 28 and a rear leg portion 30. A bottom leg portion 32 extends outwardly from the rear leg portion 30. The clip terminates in an upright leg portion 34 somewhat shorter than, but substantially parallel to the rear leg 30. A threaded fastener 36 secures a dielectric housing member 38 between parallel legs 30 and 34. A pivot block 40 is affixed to the bottom leg portion 32.

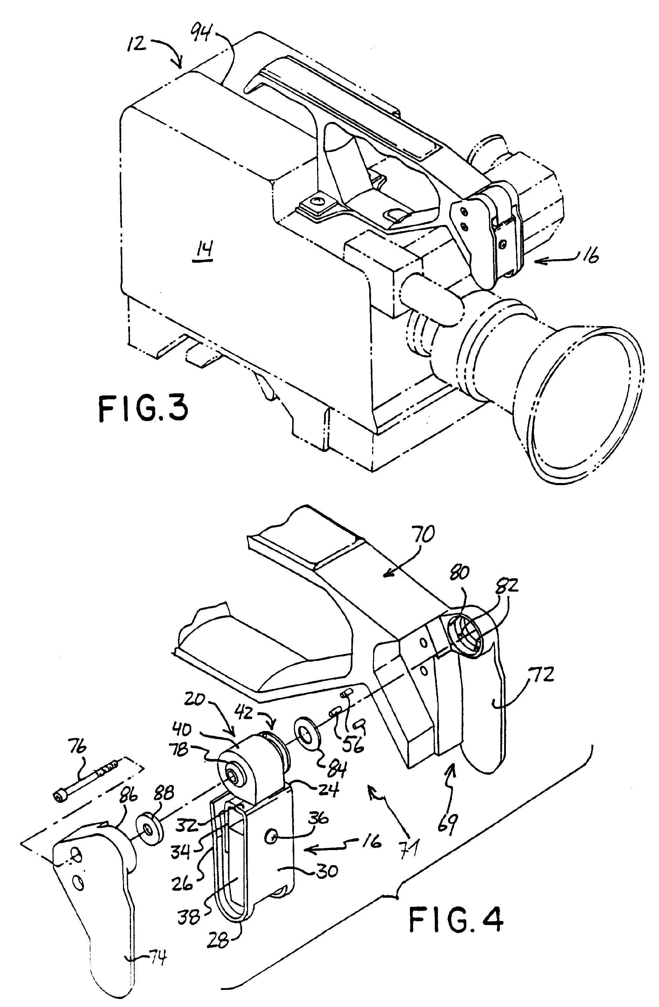

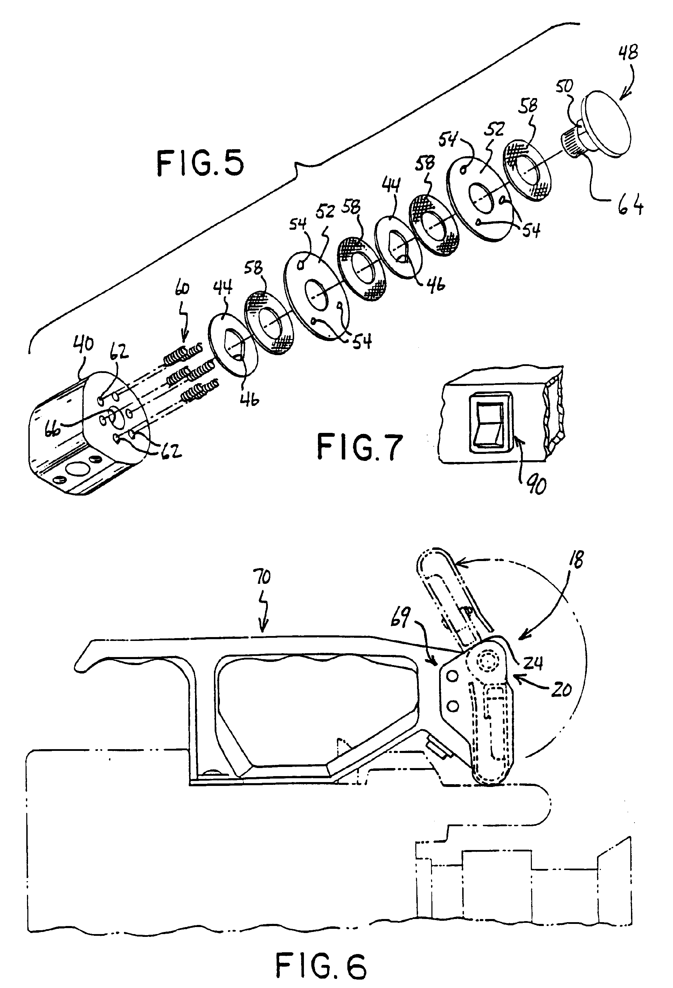

Referring to FIG. 5, the details of the clutch mechanism 42, secured to pivot block 40, are illustrated. Two braking rings 44 having central openings 46, keyed to the projecting surface 50, prevent turning with respect to the pivot block 40. Two drive washers 52 include a means of being keyed such as pin holes 54 which receive pins 56, as seen in FIG. 4. A plurality of fiber discs 58 are positioned to create friction and to prevent rubbing between the metal discs 44 and 52. A plurality of springs 60 are disposed in bores 62 and project outward to apply pressure to all of the discs and rings which are used in constructing the clutch 42. The assembly of the rings and discs are held in place by a press-in-plug 48 having a splined lug 64 which is received in a bore 66 of pivot block 40.

In FIG. 4, there is illustrated a mounting block 69 having a chamber 71 formed between two side walls 72 and 74. The chamber can be integrally formed in the camera body such as by molding it into the handle. For example, one side wall 72 of the chamber can be molded into handle 70. Then, the other side wall 74 can be attached with means such as screws 76 to the other side wall 72 with the pivot block and other elements disposed therebetween.

It is also within the terms of the invention to form a handle of two mating halves which can include a side wall mounted on each. When the mating halves are attached, the chamber 71 is formed.

Referring again to FIG. 4, the pivot block 40 includes centering bushing 78 projecting from one end of the block 40. The pivot block is preferably constructed to be integral with the handle 70. One side 72 of the handle 70 includes a circular bore 80 adapted to receive the clutch attached to the pivot block 40. The pins 56 are received within bores 82 which in turn are disposed within bore 80. A belleville or wave-washer type spring 84, disposed between the bore 80 and the clutch 42, secures the pivot block 40 axially. The other end of the pivot block is received in a circular bore 86 in side wall 74 which in turn is attached by any conventional means to handle 72. A bushing 88 is provided to coact with the centering bushing 78.

In operation, the clip and socket subassembly 18 can be pivoted outward from a stored position within walls 72 and 74 of the handle 70, as shown in FIG. 6. The drive washers are keyed by the pins 56, or similar means and secured in place by circular bore 80. The springs 60 apply pressure and, in conjunction with the friction generated by the fiber discs 58, provide a predetermined torque enabling the clip and socket subassembly 18 to smoothly pivot to any selected location and remain in that location until another location is selected. This is an important feature because the cameraman can adjust the position of the light with one hand while operating the camera.

The dielectric housing member 38, as more fully described in U.S. Patent US-A-4,554,621, can include a pair of parallel slots which are adapted to receive the parallel contact pins extending from the rear of a lamp or bulb until contact is made with a pair of spring, electrically conductive, contact elements provided in each of the parallel slots. The contact elements are each connected by a suitable electric wire 98 to a manually-operated switch 90. The switch 90 can be located on the underside of the handle 70, as seen in FIG. 6. However, it is within the terms of the present invention to dispose the switch in any desired location on the camera. Moreover, it is further within the terms of the present invention to operate the modular light directly by the camera so that an external switch is unnecessary.

The switch 90 is preferably a three way switch, as seen in FIG. 7, which includes "MANUAL ON", "MANUAL OFF" and "AUTOMATIC" positions. The "ON" and "OFF" positions simply turn the light on and off. The "AUTOMATIC" position integrates the start signal for operating the camera to record on video tape with an "ON" switch for the light. This feature provides light only when the camera is being operated. The advantage is the conservation of battery power and bulb life.

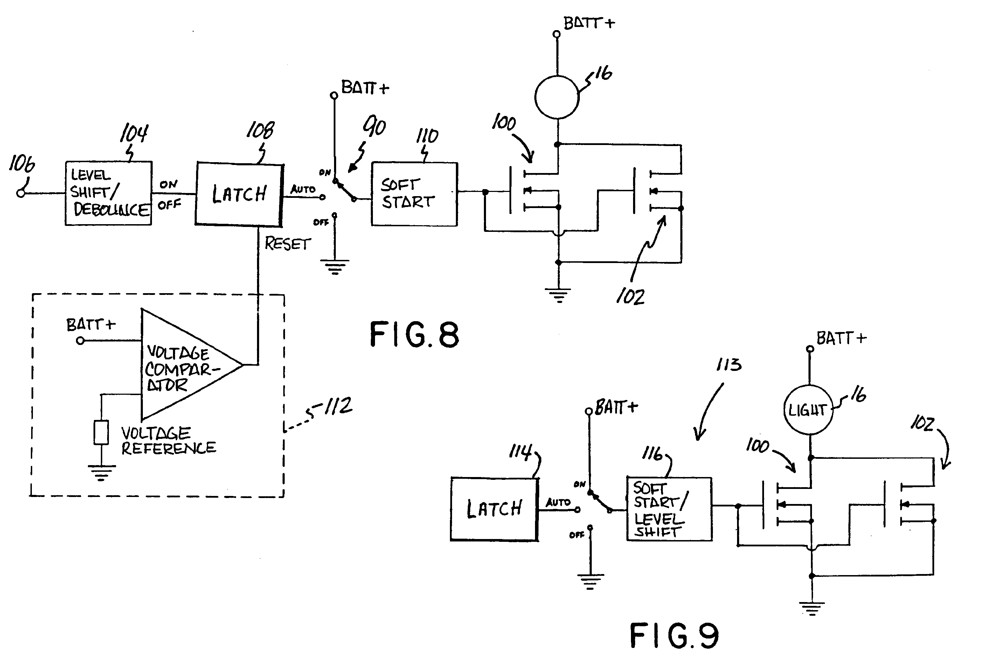

Referring to FIG. 8, there is shown a circuit schematic of a modular light assembly incorporating the automatic feature and conventional camera circuitry. The automatic feature can incorporate two low on resistance field effect transistors (FET's) 100, 102 for turning on a bulb in a modular light 16 such as an 85 watt maximum EYF/FPA or EYC/FPB type bulb. The three position toggle switch 90 is of the small signal variety and is used to turn the FET's on and off which turn the light bulb on and off. It is noteworthy, that the automatic feature is not designed to be used in high wattage and high voltage applications, such as 200 watt 30 volt applications.

The supply voltage for the circuitry is taken directly from the battery which can be internally provided in the camera or external to the camera. Typically, the supply voltage is regulated at an internal printed circuit board to 15 volts DC maximum. The control circuitry contains a comparator input circuit 104 for level shifting the signal from a momentary video tape recorder (VTR) Start/Stop pushbutton switch typically disposed in the camera lens to the control circuitry in the light 16. The input circuit 104 also contains a debounce circuit to prevent erroneous triggering by the VTR Start/Stop switch. It is believed that this input configuration should adapt to most other applications. Connected to the input comparator circuit 104 is a flip/flop latch circuit 108 which latches the signal to keep the light on when the button 106 is released.

A soft start circuit 110 incorporating a RC time constant is connected between the latch circuit and the gate circuit of the FET's 100 and 102 so that the FET's turn on more slowly in order to provide a soft-start for the light bulb. The soft start reduces the initial surge current seen at the battery terminals by a measured 10 amps maximum.

A low battery override circuit 112 is included in the light circuitry to prevent FET failures. Failures occur when the FET's enter a quasi on state due to reduced gate drive as the battery voltage falls. The FET junction temperature exceeds rated specifications and the device is destroyed. Over dissipated FET's may cause damage to other parts in the handle or the camera in the finished product. The low battery voltage override circuit turns the light off if the battery dips below 8 volts and prevents the aforementioned failures from occurring.

Referring to FIG. 9, a circuit design 113 is illustrated using some internal camera circuitry from a conventional video camera. Identical elements are given the same reference numeral throughout the drawings. Two FET's 100, 102 are provided to turn the light on and off. The camera can have internal circuitry that can provide a latch circuit 114 for latching FET's. The latch circuit corresponds to latch circuit 108 illustrated in FIG. 8. The circuit components corresponding to 104, 106 and 112, as illustrated in FIG. 8, are provided internally of the camera. The remainder of the circuit 113 is substantially the same. The level shift circuit can be incorporated in the soft start circuit, if desired, as shown in circuit block 116.

Referring to FIG. 2, there is shown a schematic representation of a video camera with a dotted representation of the internal wiring 92 between the three way switch 90 and a relay circuit which activates the camera. FIG. 3 is suitable for retrofitting a video camera without internal wiring so as to incorporate the light. In this instance, an external wire 94 is illustrated as being connected between the handle and a power supply or battery at the back of the camera body.

The combination video camera and light, as illustrated in FIG. 1, shows the light in an upright, operable position. The light can pivot up and down through an arc of about 120 degrees. When the light is not in use or is stored for transporting purposes, the light can be pivoted to a second location, as seen in FIG. 2, where it assumes a contour which matches the outline of the camera. In this position, the camera can easily be stored in a camera case. Further the lens of the light can readily be protected from damage.

As seen in FIG. 3, the light can be removed and the electrical socket can be stored in the chamber 70 where it is unobtrusive and does not protrude to create a potential hinderance in operating or transporting the camera.

Although the camera light is preferably attached to the handle, as illustrated, it is also within the terms of the present invention to integrate the mounting block with the chamber structure to store the electrical conductor element in any desired location on the camera body. Further the mounting block with the chamber structure could be mounted to the video camera by conventional means such as for example studs or shoes.

The patent mentioned herein is incorporated by reference in its entirety to this specification.

## Claims

1. A video camera (10), comprising:
a video camera body (14);
a light module (22);
mounting means (69) integral with said video camera body (14) for mounting said light module (22) on said camera body (14), said mounting means (69) including a pivotal connection means (20) for pivotally mounting said light module (22) on said camera body (14),
said pivotal connection means (20) is included in an electrical connector (18) adapted to slidably receive said light module (22) and from which said light module (22) is removable,
**characterized in that**
said mounting means (69) has a chamber (71) formed between two side walls (72, 74) and in which said electrical connector (18) can be stored without portruding.

2. The video camera according to claim 1 further characterized in that said pivotal connection means (20) includes a clutch mechanism (42) secured to a pivot block (40) and enabling the light module (22) to remain in any selected position.

3. The video camera according to any of the preceding claims, further characterized in that said mounting means (69) includes two mating halves which form said chamber (71) when attached.

4. The video camera according to claim 2 further characterized in that said clutch mechanism (42) includes fiber discs (58) positioned to create friction.

5. The video camera according to claim 2 further characterized in that said clutch mechanism comprises:
- a press-in-plug (48) having a splined lug (64) which is received in a bore (66) of said pivot block (40), and a projecting surface (50),
- braking rings (44) having central openings (46) keyed to said projecting surface (50),
- drive washers (52)
- fiber discs (58) positioned between said braking rings (44) and said drive washers (52) to create friction and prevent rubbing between them,
- and a plurality of springs (60) disposed in bores (62) of said pivot block (40) and projecting outward to apply pressure to all of said discs and rings,
- the assembly of said rings and discs being held in place by said press-in-plug (48).

6. The video camera according to claims 2, 4, or 5 or according to claim 3 when appended to claim 2, further characterized in that it comprises a handle (70) with which said pivot block (40) is constructed to be integral.

## Patentansprüche

1. Eine Videokamera (10) umfassend:
einen Videokamerakörper (14);
ein Beleuchtungsmodul (22);
eine Befestigungseinrichtung (69), die mit dem genannten Videokamerakörper (14) zum Anbringen des genannten Lampenmoduls (22) an dem genannten Kamerakörper (14) einheitlich ist, wobei die genannte Befestigungseinrichtung (69) eine verschwenkbare Verbindungseinrichtung (20) zum verschwenkbaren Anbringen des genannten Lampenmoduls (22) an dem genannten Kamerakörper (14) einschließt,
die genannte verschwenkbare Verbindungseinrichtung (20) in einem elektrischen Verbinder (18) eingeschlossen ist, der verschiebbar den genannten Lampenmodul (22) aufnehmen kann, und von dem der genannte Lampenmodul (22) entfernbar ist,
**dadurch gekennzeichnet, daß**
die genannte Befestigungseinrichtumg (69) eine Kammer (71) hat, die zwischen zwei Seitenwänden (72, 74) gebildet ist und in der der genannte elektrische Verbinder (18) untergebracht werden kann, ohne daß er hervorsteht.

2. Die Videokamera gemäß Anspruch 1, ferner **dadurch gekennzeichnet, daß** die genannte verschwenkbare Verbindungseinrichtung (20) einen Kupplungsmechanismus (42) einschließt, der an einem Schwenkblock (40) angebracht ist und dem Lampenmodul (22) ermöglicht, in irgendeiner ausgewählten Position zu verbleiben.

3. Die Videokamera gemäß irgendeinem der vorhergehenden Ansprüche, ferner **dadurch gekennzeichnet, daß** die genannte Befestigungseinrichtung (69) zwei zueinandergehörende Hälften einschließt, die die genannte Kammer (71) bilden, wenn sie angebracht sind.

4. Die Videokamera gemäß Anspruch 2, ferner **dadurch gekennzeichnet, daß** der genannte Kupplungsmechanismus (42) Faserscheiben (58) einschließt, die angeordnet sind, Reibung zu erzeugen.

5. Die Videokamera gemäß Anspruch 2, ferner **dadurch gekennzeichnet, daß** der genannte Kupplungsmechanismus umfaßt:
- einen Eindrückstopfen (48), der einen Keilwellenansatz (64), der in einer Bohrung (66) des genannten Schwenkblocks (40) aufgenommen wird, und eine vorstehende Oberfläche (50) aufweist,
- Bremsringe (44), die Mittelöffnungen (46) aufweisen, die mit der genannten vorstehenden Oberfläche (50) verkeilt sind,
- Betätigungsscheiben (52)
- Faserscheiben (58), die zwischen den genannten Bremsringen (44) und den genannten Betätigungsscheiben (52) angeordnet sind, um eine Reibung zu erzeugen und zwischen ihnen ein Reiben zu verhindern,
- und eine Vielzahl von Federn (60), die in Bohrungen (62) des genannten Schwenkblocks (40) angeordnet sind und nach außen hervorstehen, um Druck auf alle die genannten Scheiben und Ringen auszuüben,
- wobei die Anordnung der genannten Ringe und Scheiben in ihrer Lage durch den genannten Eindrückstopfen (48) gehalten werden.

6. Die Videokamera gemäß den Ansprüchen 2, 4 oder 5 oder gemäß dem Anspruch 3, wenn von Anspruch 2 abhängig, ferner **dadurch gekennzeichnet, daß** sie einen Handgriff (70) umfaßt, mit dem der genannte Schwenkblock (40) einstückig konstruiert ist.

## Revendications

1. Caméra vidéo (10) comprenant :
un corps de caméra vidéo (14);
un module d'éclairage (22);
des moyens de montage (69), réalisés d'un seul tenant avec ledit corps de caméra vidéo (14), pour monter ledit module d'éclairage (22) sur ledit corps de caméra (14), lesdits moyens de montage (69) comprenant des moyens de connexion pivotante (20), prévus pour monter pivotant ledit module d'éclairage (22) sur ledit corps de caméra (14),
lesdits moyens de connexion pivotante (20) étant inclus dans un connecteur électrique (18) adapté pour loger coulissant ledit module d'éclairage (22) et duquel ledit module d'éclairage (22) peut être retiré,
caractérisée en ce que
lesdits moyens de montage (69) présentent une chambre (71) formée entre deux parois latérales (72, 74) et dans laquelle ledit connecteur électrique (18) peut être rangé sans faire saillie.

2. Caméra vidéo selon la revendication 1, caractérisée en outre en ce que lesdits moyens de connexion pivotante (20) comprennent un mécanisme d'embrayage (42), fixé à un bloc de pivotement (40) et permettant au module d'éclairage (22) de rester en toute position sélectionnée.

3. Caméra vidéo selon l'une quelconque des revendications précédentes, caractérisée en outre en ce que lesdits moyens de montage (69) comprennent deux moitiés coopérantes, qui forment ladite chambre (71), lorsqu'elles sont fixées.

4. Caméra vidéo selon la revendication 2, caractérisée en outre en ce que ledit mécanisme d'embrayage (42) comprend des disques de fibres (58) disposés de façon à produire une friction.

5. Caméra vidéo selon la revendication 2, caractérisée en outre en ce que ledit mécanisme d'embrayage comprend :
- une fiche mâle à enfoncer (48) ayant une projection cannelée (64) qui est logée dans un alésage (66) dudit bloc de pivotement (40), et une surface saillante (50),
- des bagues de freinage (44) ayant des ouvertures centrales (46) calées sur ladite surface saillante (50),
- des rondelles d'entraînement (52),
- des disques de fibres (58) disposés entre lesdites bagues de freinage (54) et lesdites rondelles d'entraînement (52) pour créer une friction et empêcher tout frottement entre elles,
- et une pluralité de ressorts (60), disposés dans les alésages (62) dudit bloc de pivotement (40) et faisant saillie vers l'extérieur pour appliquer une pression sur tous lesdits disques et bagues,
- l'assemblage desdites bagues et desdits disques étant maintenu en place par ladite fiche mâle à enfoncer (48).

6. Caméra vidéo selon les revendications 2, 4 ou 5 ou selon la revendication 3 lorsqu'elle dépend de la revendication 2, caractérisée en outre en ce qu'elle comprend une poignée (70) avec laquelle ledit bloc de pivotement (40) est réalisé d'un seul tenant.
